# EUROPEAN PATENT APPLICATION

(11) **EP 4 623 674 A1**
(43) Date of publication of application: **01.10.2025**
(21) Application number: 25166768.9
(22) Date of filing: 27.03.2025
(51) Int. Cl.: A01G 9/24

(54) **HORTICULTURAL ENVIRONMENT SYSTEM AND METHOD**

(30) Priority: 27.03.2024 GB 202404404
(71) Applicant: Akre Limited, Kirkcaldy Fife KY2 5UW (GB)
(72) Inventor: Drysdale, Renwick, Kirkcaldy, KY2 5UW (GB); Coventry, Colin, Kirkcaldy, KY2 5UW (GB)
(74) Representative: Williams Powell

(57) **Abstract**

A horticultural environment system and method are disclosed. The system includes a controlled environment for accommodating plants, a first sensor configured to monitor an environmental condition of the controlled environment, a second sensor configured to monitor an environmental condition of an external environment comprising an environment external to the controlled environment, an actuator operable to open or close the controlled environment to the environmental condition of the external environment and a control system configured to receive the sensor data from the first and second sensors, to identify a first difference in the environmental condition between the controlled environment and a predetermined setpoint from the sensor data. If the first difference is greater than a predetermined amount, the control system is configured to determine, from the sensor data from the second sensor, a change to the first difference upon the controlled environment being opened to the environmental condition of the external environment. If the control system determining the change reduces the first difference, the control system is configured to trigger operation of the actuator to open the controlled environment to the external environment.

## Description

### Field of the invention

The present invention relates to a horticultural environment system and method that are particularly applicable to tree nurseries.

### Background to the Invention

Existing horticultural environmental control systems control the conditions of an internal controlled environment using sensors within the growing environment. They are generally dependent on costly, non-passive, input-intensive equipment in the form of heating, CO2 enrichment, lighting, dehumidification etc to maintain a growing environment suitable for the horticulture being supported.

The horticultural industry has dramatically improved the yield of various food crops while reducing the inputs required in recent decades. Despite this progress, it is responsible for a significant proportion of energy consumption, particularly in controlled environments. With the increase in energy prices and growing scarcity of freshwater reserves, existing horticultural systems such as heated glasshouses and energy-intensive vertical farming models have become increasingly uneconomic and wasteful. It is therefore essential to transition to production systems that are significantly more water and energy efficient.

Although there are similarities, there are often significant differences. For example, trees have different propagation needs to other vegetation such as flowers and vegetables. It is desirable to produce and maintain horticulture as efficiently and economically as possible whilst accommodating needs of the particular crops.

### Statement of Invention

According to an aspect of the present invention, there is provided a horticultural environment system comprising:
a controlled environment for accommodating plants;
a first sensor configured to monitor an environmental condition of the controlled environment;
a second sensor configured to monitor an environmental condition of an external environment comprising an environment external to the controlled environment;
an actuator operable to open or close the controlled environment to the environmental condition of the external environment; and,
a control system configured to receive the sensor data from the first and second sensors, to identify a first difference in the environmental condition between the controlled environment and a predetermined setpoint from the sensor data,
wherein upon the first difference being greater than a predetermined amount, the control system is configured to determine, from the sensor data from the second sensor, a change to the first difference upon the controlled environment being opened to the environmental condition of the external environment, wherein upon the control system determining the change reduces the first difference, the control system is configured to trigger operation of the actuator to open the controlled environment to the external environment.

Preferably, the control system is configured to predict future values of the environmental condition from the sensor data from the second sensor. This may be based on recordal of prior trends, cross-reference to an external source of predicted values or trends or some other mechanism. For example, in the case of sunlight the control system might take the measured value and cross-reference sunset time to calculate how long the external environment can be relied upon before it needs to switch to artificial source. A similar approach may be taken for temperature or precipitation, for example.

Alternatively, or in addition, the second sensor may be a virtual sensor or a data source of sensor readings or predictions from an external party.

Unlike flowers and vegetables that never see the outdoors or are only be expected to last a season before being harvested or replaced, trees produced for woodland creation need to be "hardened off" before they leave the controlled growing environment to ensure they survive when they are planted in new woodlands. This process requires a controlled transition from optimal growing conditions to ambient external conditions to both maximise yield and survival potential once planted.

Current global tree propagation techniques use low-tech plastic tunnels or passive glasshouse designs. They rely heavily on manual control and intervention and produce significant waste in the form of water, power and compost. These systems produce trees that are susceptible to failure once planted in the woodland.

It is estimated that more than 1 trillion additional trees are required globally by 2050. There is therefore a need to improve the efficiency and quality of propagation dramatically.

It will be appreciated that some environmental conditions may be impacted by others. For example, the external environmental condition may be sunlight. While this is a factor that is relevant to plants, it also impacts other environmental conditions of the controlled environment such as temperature. In one embodiment, the control system may monitor temperature of the controlled environment and sunlight of the external environment and control exposure to sunlight, by opening or closing blinds by the actuator, for example, to adjust the temperature of the controlled environment. It will also be appreciated that some environmental conditions of the controlled environment may be impacted by more than one environmental condition of the external environment. In such a situation, the control system may apply a weighting or some other optimisation approach such as machine learning (for example developing a neural network or genetic programming model that links the various conditions based on their respective costs - for example, the cost may include factors such as financial, risk to plants, requiring use of artificial stimuli on the condition, closeness to setpoint).

It will also be appreciated that the change to the first difference may be assessed or predicted over time - in determining whether to open/close the controlled environment, the control system may take into account how long the controlled environment needs to be opened to the environmental condition of the external environment for the change to take place or be meaningful. It may also take into account data predicting the external environmental condition over time. The data predicting the external environmental condition may be based on data learnt by the control system or it may be from external sources.

Preferably, the control system stores data from the first and second sensors in a data repository to build up a record of environmental conditions over time. The control system may apply machine learning or a similar approach to pre-emptively apply control actions to the actuators based on prior trends identified from the data repository.

In preferred embodiments, sensor data is combined with setpoint data and is used to automatically and pre-emptively determine control actions to be triggered. This can be used to rely on external environmental conditions when they are suitable (and therefore save resources instead of artificially maintaining the environmental condition for the controlled environment). Advantageously, this can also be used for crops that will transition from inside the controlled environment to outside the controlled environment such as tree species to limit the effects of shock. Using both internal and external environmental data to control the internal conditions can radically improve the quality and efficiency of crop growth whilst minimising resource inputs.

Capital expenditure is significantly reduced due to the passive nature of the environmental controls (because the system is biased towards using the external environmental conditions when possible) while maintaining yield and quality.

As well as reducing capital expenditure, plants experience less stress and are of better health due to optimised environmental conditions. This results in reduced reliance on harmful agrochemicals, and higher establishment.

In some crops it is necessary to transition from the optimal controlled environment to the natural external conditions such as for tree seedlings used in woodland creation. A transition from inside the controlled environment to outside the controlled environment can lead to shock and fatality. It is therefore been identified that shock can be minimised by adjusting the internal environment with consideration for the external environment to allow for a gradual transition which avoids shock whilst improving the hardiness of trees. By moderating the transition of the exposure to the external environment the crop is successfully acclimatised to natural conditions. In particular, it has been identified that selective exposure to the environment can improve the hardiness of the trees. Preferred embodiments moderate that exposure so that trees are exposed to extremes in a limited fashion and/or extremes are avoided, at least until a predetermined time point in the trees growth, or some other measurable threshold such as root ball size exceeding a predetermined threshold.

The control system can be local and/or remote to the controlled environment, and includes setpoints from which the environmental controls are configured. These setpoints define environmental conditions for the production of crops (temperature ranges, moisture ranges, period of time to be exposed to light etc) and link to the control of the actuators (timing for opening vents, turning on and off lighting etc).

The control system preferably includes a data store, which has the potential to record camera imagery related to the health and growth of crops. This can be used to optimise the growing conditions within the controlled environment as more data is collected for specific species.

The data repository may encode setpoints on environmental factors for growing the trees. It may be comprehensive or limited to trees or other crops being propagated. The setpoints define environmental conditions for propagation of the trees either in direct terms (temperature ranges, moisture ranges, period of time to be exposed to light etc) and/or linked to conditions and the actuators (timing for opening vents, turning on an off lighting etc).

Sensor data received from the sensors is indicative of the controlled and external environment - preferably the external environment may be that in which the tree will eventually be planted, in which case the control system may default to exposing the tree to as much of the normal environmental conditions as it can (for example, it may act as a buffer during initial propagation and not expose the tree to excesses in temperature cold, moisture, wind etc). Alternatively, the control system may utilise the external environment during periods where it coincides (within a predefined tolerance range) to setpoints defined in the data repository for the tree (so the actuators may be opened to the external environment during periods where the environment coincides with the setpoints set for the tree at that stage in the tree's development).

Preferably, the control system and sensors integrate soil moisture, humidity, wet bulb, temperature, CO₂ and light readings inside and outside the growing area to automatically adjust controllable components in the glasshouse including fans, vents, irrigation, lights and screens to create the optimal growing conditions for the species growing.

### Brief Description of the Drawings

Embodiments of the present invention will now be described by way of example only with reference to the accompanying drawings in which:
Figure 1 is a schematic diagram of a horticultural environment system according to an embodiment;
Figure 2 is a schematic diagram of aspects of a horticultural environment system according to an embodiment.

### Detailed Description

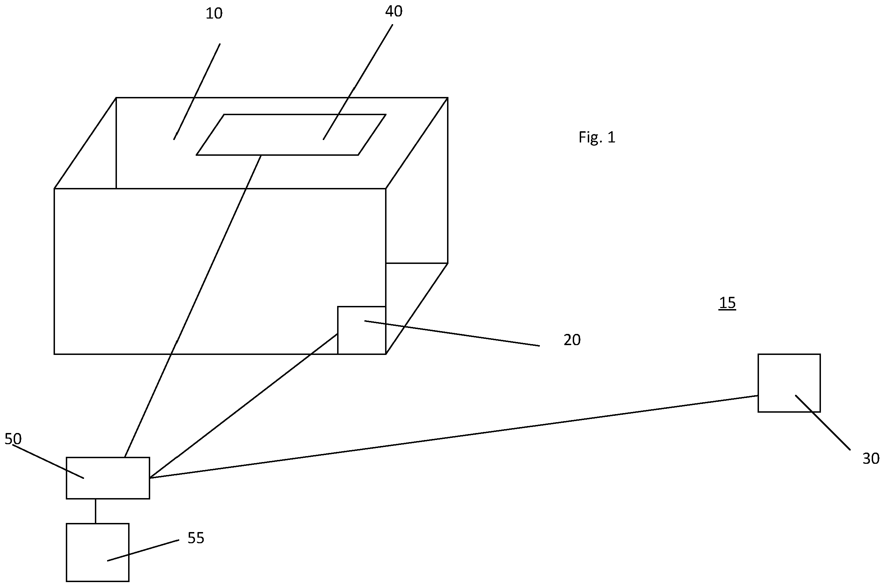

Figure 1 is a schematic diagram of a horticultural environment system according to an embodiment.

The system includes:
a controlled environment 10 for accommodating plants;
a first sensor configured 20 to monitor an environmental condition of the controlled environment 10;
a second sensor 30 configured to monitor the environmental condition of an external environment 15 comprising an environment external to the controlled environment;
an actuator 40 operable to open or close the controlled environment to the environmental condition of the external environment; and,
a control system 50 configured to receive the sensor data for the environmental condition from the first and second sensors, to identify a first difference in the environmental condition between the controlled environment and a predetermined setpoint and determine, from the sensor data from the second sensor, a change to the first difference
upon the controlled environment being opened to the environmental condition of the external environment, and upon control system determining the change reduces the first difference, to trigger operation of the actuator to open the controlled environment to the external environment.

There are preferably multiple first 20 and second 30 sensors. Depending on the sensor types, there may be multiples of the same type for redundancy, better coverage and/or resilience to spurious sensor data. Preferably, the system is configured to monitor different environmental conditions -a single sensor type might be able to monitor multiple environmental conditions or it may be that individual sensor types are used for certain/each environmental condition. While it may be preferred that the same sensor type is used for the external environment and the controlled environment (so that sensor data can be expected to be reasonably consistent), in certain embodiments different sensor types are used, in which case the controller may be configured to normalise or otherwise process the received sensor data so that it can be compared.

Preferably, sensors are distributed inside the growing area (the controlled environment) and are configured to monitor environmental conditions, examples of which are listed below. This data feeds into the control system 50. The control system processes the data and preferably stores it in a data repository 55. The control system 50 compares the sensor data to control setpoints (which may also be stored in the data repository or in some other data store). If the sensor data is outside of the setpoints, the control system 50 triggers an action to bring the controlled environment conditions back within the setpoints. Preferably, this process happens pre-emptively using external data on future conditions.

In one embodiment, the controlled environment is, or includes, a glasshouse tree nursery.

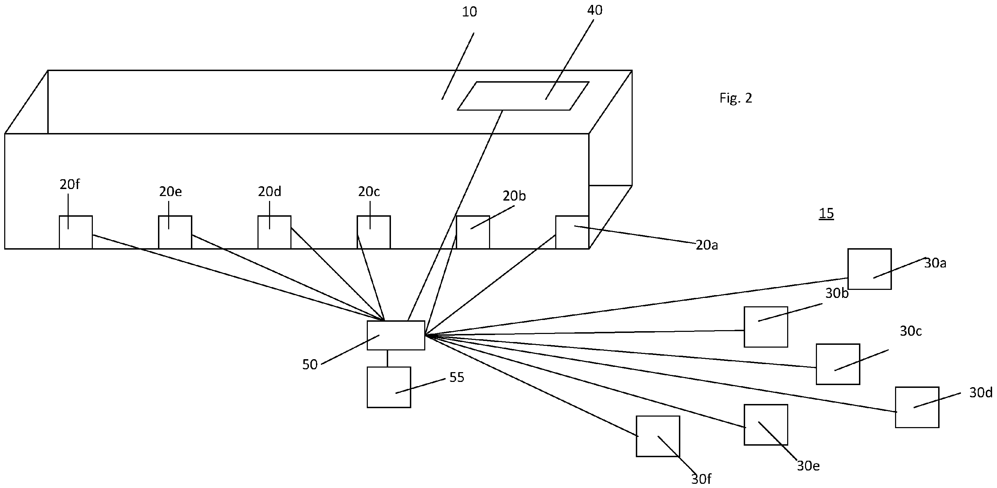

Figure 2 is a schematic diagram of aspects of a horticultural environmental system according to an embodiment.

In one embodiment, 24 environmental sensors 20 are installed inside the controlled environment, and 6 environmental sensors 30 are installed in the external environment. In the illustrated embodiment, the sensors in the controlled environment are grouped in a collective housing/device 20a-20f, in this embodiment with each device containing 4 individual sensors configured to detect different environmental conditions (so as the controlled environment expands, another device with a grouping of sensors can be deployed to provide coverage of that expansion area). There is preferably one data receiver that either is, or is connected to the control system 50 configured to receive the data transmitted from the sensors.

In one embodiment, environmental sensors are installed inside and outside a glasshouse. The control system is configured to maintain a stable 30% soil moisture, 20 degree celsius 70% humidity, 400 parts per million Co2 and 500 micromoles per M2 of light for two growing cycles per year. This reduces energy consumptions per plant by 30%, doubles annual output and optimises usage of passive energy.

This is done by linking the environmental control system to internal and external sensors. Each variable may be set to specific set points so for example, if the humidity surpasses 80% vents in the glasshouse will be triggered to open. Preferably there are vents (50a) on both pitches of the roof or walls so the wind direction sensor can be used to determine that the leeward side will open rather than the windward side to prevent damage. A similar approach is taken for controlling the thermal load within the glasshouse by programming a thermal screen (50b) to close before sunset to trap the heat in and improve nocturnal growth. LED lights adjust between 1 and 100 to hit 500 micromoles per M2 so we calculate the ambient light and supplement it where necessary and extend the daylength. Preferably, every variable responds to the set points to balance the environment and optimise tree growth.

Embodiments of the present invention can be used in any geography to propagate trees more efficiently. Further, this technology can be used to create any preferred internal environment for propagation of any crop.

In one embodiment, when crops are transplanted and removed from their internal controlled growing environment, images are captured to serve as proxies for assessing crop health and quality, as well as to document their establishment. These images may be used with machine learning and artificial intelligence techniques, leveraging indices such as the Normalized Difference Vegetation Index (NDVI) and Normalized Red Edge Index (NDRE). NDVI and similar indices are to assess and predict crop quality by providing a quantifiable measure of crop/tree health. As well as assessing crop quality this can also be used for the early detection of disease within crops, allowing for pre-emptive action as trees are transferred from inside the controlled environment to outside. This results in potentially mitigated disease spread and the prevention of further crop damage.

Through these images and indices, it is possible to better understand the impact of environmental conditions internal to the controlled growing environment on crop performance, integrating both health and quality. These images are preferably recorded in the data repository, and as the dataset grows it allows for greater insight and optimisation of the machine learning model(s). At the most basic level, this is understanding crop establishment based on the success rate of crop based on initial sowing. The data encompasses environmental conditions both inside and outside the growing environment and the analysis of crop images. By correlating images of crops with environmental conditions, it's possible to determine the influence of these conditions on crop quality.

Understanding the relationship between environmental conditions and crop quality enables the prediction of crop performance. This knowledge forms the basis for optimizing growing conditions over time, aiming to enhance crop quality, establishment, and overall health. Given the emphasis on growing conditions as a determinant for crop quality and health, it's possible to further explore how specific environmental variables-such as temperature, humidity, light intensity, and CO2 levels-affect different crop species. Through this, deeper insight can be achieved, allowing for increasingly optimised controlled growing environments ensuring maximum crop yield and quality.

Embodiments of the present invention can be used in any geography to propagate trees or other horticulture or crops more efficiently. Further, this technology can be used to create any preferred internal environment for propagation of any crop.

As embodiments are preferably trained and obtain sensor data on a local external environment and its impact on plant cultivation following their exposure to it, preferred embodiments enable the transfer and customisation of the control system to other facilities, either to replicate that control or subject to adjustment to take into account their local external environment. Optionally, the control system may be adaptive to determine appropriate control actions based on the actuators available at the facility - for example the mechanism to open windows may differ, there may be heaters or coolers at some but not other facilities, the devices themselves may differ, etc. In a further embodiment, a control system may be trained on virtual sensor data (actual or predicted sensor data for a locale to which the control system is to be deployed). The actuators and also the data feed from the internal sensors could also be virtual so as to provide training/preparation of a control system based on predicted data and responses such that a control system can be at least roughly trained, or trained for eventualities that may not arise in the day to day environmental conditions but which nevertheless can be modelled in virtual sensor data or modelled or extracted from historic data, before deployment.

The advantages of this technology are that it radically improves the quality of horticulture propagation while reducing the cost/resource inputs. In the case of trees, this is particularly important at a time when we need to produce an additional 1 trillion trees by 2050.

The use of the controlled environment and control system reduces inputs dramatically which does the following:
- Reduces cost
- Reduces Labour
- Improves the efficiency of material input usage
- Reduces the area needed to produce the same output of trees
- Uses natural light, heat and CO2 more efficiently without the need to enrich these elements it improves the quality of the trees
- It leads to better root development
- Which in turn leads to more resilient trees that can withstand a changing climate
- This means a lower cost of replacing losses once they are planted
- It also leads to higher early-stage growth in the trees or yield

Additional features include:
- The control systems is extensible. Any sensors can be added and linked to any elements of the glasshouse, whether in a 1:1 relationship or in combination, with control actions being determined by the control system based on individual or collective sensor readings (for example weighted or subject to some threshold at which point particular sensor readings may take priority on a control action)
- In one embodiment, 5 temperature, humidity and wet bulbs are used inside the glasshouse, 1 temperature, humidity and wet bulb outside the glasshouse, 2 light sensors (photosynthetically active radiation (PAR)), 1x CO2 sensor (Parts per million (PPM)), an external weather station giving wind direction, solar radiation and a second temperature and humidity reading with precipitation in mm of rainfall. 6 soil moisture sensors are used in one example for irrigation automation. Cameras may be mounted in the glasshouse for assessing plant health.

To illustrate the utility of the environmental control system we can consider the setpoints for tree propagation in two different geographies:
1) Downy Birch / Betula Pubescens (Grown in the Northern Europe)
   Soil Moisture: 50% (20% tolerance)
   Light (µmol m-2 s-1): 500 PAR
   Temperature: 25°c (5°c tolerance)
   Carbon Dioxide: 600 ppm
   Air Humidity: 65% (20% tolerance)
   Daylight hours: 16
2) African baobab / Adansonia digitata (Grown in Southern Africa)
   Soil Moisture: 20% (20% tolerance)
   Light (µmol m-2 s-1): 1,000 PAR
   Temperature: 27.5°c (5°c tolerance)
   Carbon Dioxide: 600 ppm
   Air Humidity: 50% (20% tolerance)
   Daylight hours: 16

Examples of sensors used in control system:
Weather device (Wind speed, wind direction, temperature, humidity, air pressure, rainfall, global radiation)
Soil Moisture
Carbon Dioxide
Humidity
Temperature
Light
Multispectral camera

This list of sensors is not exhaustive, and subject to change based on the specific geography and requirements but provides an example of the types of sensors being used.

### Example 1 - High temperatures forecasted

We're currently growing Downy Birch / Betula Pubescens with a target temperature range of 22.5-27.5°c
Time is currently 11:00
Internal temperature sensor is at 25°c
External temperature sensor is currently at 23°c
Forecast is for sunshine all day
Data suggests temperature will exceed 30°c by 12:00

Action:
Open vents partially to allow airflow, reducing temperature in glasshouse
Close screens to shade crop and prevent increase in temperature

Example 2 - Preparation of transfer of crop from inside to outside controlled environment The forecast for the next week is an average of 19°c daytime temperature, with full sun. Crop will be transplanted in one week, and so to prepare crop vents and screens are opened automatically allowing the crop to acclimatise to the natural conditions outside the controlled environment.

### Example 3 - High winds and high temperature

High winds are forecasted for the next 2 days. As well as this, the temperature will be high outside the controlled environment. The system accounts for this, and only opens the west facing vents thus preventing damage to the equipment due to the high winds.

Set points vary per species but as an example for Betula Pubescens (Downy Birch) would be:
- Soil moisture 40%
- Light 500 µmol m-2 s-1 (PAR)
- Temperature 25 degrees
- Carbon Dioxide 600 parts per million
- Air humidity 65%
- Daylight hours 16

It is to be appreciated that certain embodiments of the invention as discussed below may be incorporated as code (e.g., a software algorithm or program) residing in firmware and/or on computer useable medium having control logic for enabling execution on a computer system having a computer processor. Such a computer system typically includes memory storage configured to provide output from execution of the code which configures a processor in accordance with the execution. The code can be arranged as firmware or software, and can be organized as a set of modules such as discrete code modules, function calls, procedure calls or objects in an object-oriented programming environment. If implemented using modules, the code can comprise a single module or a plurality of modules that operate in cooperation with one another.

Optional embodiments of the invention can be understood as including the parts, elements and features referred to or indicated herein, individually or collectively, in any or all combinations of two or more of the parts, elements or features, and wherein specific integers are mentioned herein which have known equivalents in the art to which the invention relates, such known equivalents are deemed to be incorporated herein as if individually set forth.

Although illustrated embodiments of the present invention have been described, it should be understood that various changes, substitutions, and alterations can be made by one of ordinary skill in the art without departing from the present invention.

## Claims

1. A horticultural environment system comprising:
a controlled environment for accommodating plants;
a first sensor configured to monitor an environmental condition of the controlled environment;
a second sensor configured to monitor an environmental condition of an external environment comprising an environment external to the controlled environment;
an actuator operable to open or close the controlled environment to the environmental condition of the external environment; and,
a control system configured to receive the sensor data from the first and second sensors, to identify a first difference in the environmental condition between the controlled environment and a predetermined setpoint from the sensor data,
wherein upon the first difference being greater than a predetermined amount, the control system is configured to determine, from the sensor data from the second sensor, a change to the first difference upon the controlled environment being opened to the environmental condition of the external environment, wherein upon the control system determining the change reduces the first difference, the control system is configured to trigger operation of the actuator to open the controlled environment to the external environment.

2. The horticultural environment system of claim 1, wherein the control system is configured to predict future values of the environmental condition from the sensor data from the second sensor.

3. The horticultural environment system of claim 2, wherein the control system is configured to predict future values based on one or more of: local data recorded of prior trends, an external data source of predicted values and an external data source of prior trends.

4. The horticultural environment system of claim 1, wherein the second sensor is a virtual sensor or a data source of sensor readings or predictions from an external party.

5. The horticultural environment system of claim 1, wherein first sensor is configured to monitor temperature of the controlled environment and the second sensor being configured to monitor sunlight of the external environment and control exposure to the sunlight of the controlled environment.

6. The horticultural environment system of any preceding claim, the first and second sensors monitoring multiple environmental conditions, the control system being configured to may apply a weighting or optimisation approach based on their respective cost of opening the controlled environment to the external environment, a cost being determined from a change in first difference of the respective environmental conditions.

7. The horticultural environment system of claim 6, wherein the control system includes a threshold for one or more of the environmental conditions, the change to the first difference may be assessed or predicted over time and the cost being determined in dependence on the time to reach the threshold or time the environmental condition is above or below the threshold.

8. The horticultural environment system of any preceding claim, wherein the control system stores data from the first and second sensors in a data repository, building a record of environmental conditions and result of control actions over time, the control system being configured to train a machine learning system based on the record and to pre-emptively apply control actions to the actuators based on data received from the first and second sensors.

9. The horticultural environment system of any preceding claim, wherein the data repository encodes setpoint conditions on environmental factors for growing the plant, the setpoints defining environmental conditions for propagation of the plant.

10. The horticultural environment system of claim 9, wherein the setpoints define settings for the actuators, the control system being configured to apply the respective setting to the actuator upon its associated setpoint condition being met.

11. The horticultural environment system of any preceding claim, wherein upon data from the second sensor being received that is indicative that the external environment corresponds to an environment identified to the control system that the plant will eventually be planted, the control system being configured to default to exposing the plant to external environmental conditions unless the sensed or predicted external environment exceeds a safety threshold for the plant.

12. The horticultural environment system of any of claims 9 or 10, wherein the control system being configured to expose the plant to the external environment during periods where, according to sensor data received from the second sensor, the external environment coincides to setpoints defined in the data repository for the plant.

13. A computer implemented method for controlling a horticultural environment, the method including the steps of:
receiving sensor data from a first sensor configured to monitor an environmental condition of a controlled environment, the controlled environment accommodating plants;
receiving sensor data from a second sensor configured to monitor an environmental condition of an external environment comprising an environment external to the controlled environment;
identifying, by a control system, a first difference in the environmental condition between the controlled environment and a predetermined setpoint from the sensor data,
wherein upon the first difference being greater than a predetermined amount, the control system determining, from the sensor data from the second sensor, a change to the first difference upon the controlled environment being opened to the environmental condition of the external environment, wherein upon the control system determining the change reduces the first difference, the control system triggering operation of an actuator to open the controlled environment to the external environment.

14. The computer implemented method of claim 13, wherein upon data from the second sensor being received that is indicative that the external environment corresponds to an environment in which the plant will eventually be planted, the method further comprising exposing the plant to external environmental conditions unless the sensed or predicted external environment exceeds a safety threshold for the plant.

15. The computer implemented method of claim 13 or 14, further comprising exposing the plant to the external environment during periods where, according to sensor data received from the second sensor, the external environment coincides to setpoints defined in a data repository for the plant.
